# EUROPÄISCHE PATENTSCHRIFT

(11) **EP 4 225 572 B1**
(45) Veröffentlichungstag und Bekanntmachung des Hinweises auf die Patenterteilung: **19.11.2025**
(21) Anmeldenummer: 21777501.4
(22) Anmeldetag: 14.09.2021
(51) Int. Cl.: B32B 3/18, B32B 3/26, B32B 5/02, B32B 5/06, B32B 7/05, B32B 7/08, B32B 7/09, B32B 25/10, B32B 25/12, B32B 25/14, B32B 25/16, B32B 25/20, F16G 5/08, F16G 5/20

(54) **KÖRPER DIE DAS AUFTRETEN VON DEM STICK-SLIP EFFEKT ELIMINIEREN**
BODIES THAT ELIMINATE THE OCCURRENCE OF THE STICK-SLIP EFFECT
CORPS ÉLIMINANT L'APPARITION DE L'EFFET DE BROUTAGE

(30) Priorität: 06.10.2020 DE 102020006092
(43) Veröffentlichungstag der Anmeldung: 16.08.2023
(73) Patentinhaber: Gottlieb Binder GmbH & Co. KG, 71088 Holzgerlingen (DE)
(72) Erfinder: HEEPE, Lars, 72072 Tübingen (DE); KASBERGER, Julia, 71155 Altdorf (DE); TRAMSEN, Halvor, 71088 Holzgerlingen (DE)
(74) Vertreter: Kohler Schmid Möbus Patentanwälte
(86) Internationale Anmeldenummer: PCT/EP2021/075160
(87) Internationale Veröffentlichungsnummer: WO 2022/073725

(56) Entgegenhaltungen:
- EP-A1- 3 076 044
- WO-A1-2016/201308
- DE-A1- 102018 213 742

## Beschreibung

Die Erfindung betrifft einen Körper mit einer elastomeren Oberfläche, die zu verbesserten Haftungs- und Reibeigenschaften führt, insbesondere wenn der Körper mit welligen und nicht glatten Oberflächen von Drittbauteilen interagiert.

Durch DE 102 23 234 A1 ist eine strukturierte Oberfläche eines Festkörpers mit erhöhter Adhäsionsfähigkeit bekannt, wobei die Oberfläche eine Strukturierung aufweist, die eine Vielzahl von Vorsprüngen umfasst, die jeweils mit einem Fußteil und einem Kopfteil versehen sind, wobei das Kopfteil eine von der Oberfläche wegweisende Stirnfläche aufweist und jeder Vorsprung eine Größe derart besitzt, dass alle Stirnflächen den gleichen senkrechten Abstand von der Oberfläche haben und dergestalt eine adhärente, durch gegenseitige Abstände zwischen den Stirnflächen unterbrochene Kontaktfläche bilden.

Bei der bekannten Lösung wird die Oberfläche respektive Kontaktfläche durch die Gesamtheit der Stirnflächen aller Vorsprünge gebildet, wobei die Kontaktfläche die Oberfläche des jeweils anderen Gegenstandes berührt, ohne eine Verankerung einzugehen und ohne ein Ineinandergreifen der Vorsprünge. Insoweit wird die Haftverbindung durch Van-der-Waals-Kräfte vermittelt. Zusätzliche Beiträge für die Anhaftung können durch elektrostatische Kräfte oder Kapillarkräfte geliefert werden. Die Abstände zwischen den Vorsprüngen sind dabei geringer als die Querschnittsdimensionen der genannten Stirnflächen.

Durch DE 10 2008 051 474 A1 ist ein Körper bekannt, bestehend aus einem elastomeren Material oder aufweisend eine äußere elastomere Schicht, wobei in einem Bereich des Körpers in die Oberfläche des elastomeren Körpers oder in die äußere elastomere Schicht des Körpers eine das Reibungsverhalten verbessernde Oberflächenstruktur abgeformt ist. Hierfür weist die Oberflächenstruktur eine Vielzahl von Erhebungen auf, die insbesondere von prismatischer, pyramidenstumpfförmiger, zylindrischer, kegelstumpfförmiger oder pilzförmiger Form sind, die durch Kanäle voneinander beabstandet mit ihren Stirnflächen eine gemeinsame Ebene aufspannen, wobei die maximale Flächenausdehnung der Stirnflächen der Erhebungen jeweils im Bereich von 100 nm bis 5 mm liegt.

Der bekannte Körper mit der vorgeschlagenen Oberflächenstruktur zeichnet sich dadurch aus, dass eine Flüssigkeit durch die mit einer Anpresskraft angepresste Oberfläche eines mit dem elastomeren Körper kämmenden Körpers von der Oberfläche der Erhebung verdrängt und über die Kanäle abgeleitet wird. Der Effekt wird dadurch unterstützt, dass die Erhebungen sich verformen und unter Belastung ausweichen. Mit Hilfe der genannten Oberflächenstruktur werden also Bereiche auf der Oberfläche des elastomeren Körpers bereitgestellt, die auch bei Kontakt mit einer flüssigkeitsbenetzten Oberfläche im Wesentlichen flüssigkeitsfrei bleiben und daher auch unter diesen Bedingungen noch eine ausreichende Reibungskraft bereitstellen.

Insbesondere wird der bei der Paarung von trockenen Oberflächen auftretende Stick-Slip- Effekt eliminiert, der das ruckartig unterbrochene Gleiten von gegeneinander bewegten Festkörpern bezeichnet, wobei eine schnelle Bewegungsabfolge aus Haften, Verspannen, Trennen und Abgleiten der in Kontakt befindlichen Oberflächen stattfindet. Durch Vermeiden oder ein Vermindern des Stick-Slip-Effektes lassen sich ungewollte Schwingungen, die zur Geräuschabstrahlung führen, vermeiden und ein das Material schädigender Abrieb ist verhindert.

DE 10 2018 213742 A1 beschreibt einen Artikel mit einer dreidimensionalen Textilkonstruktion 1 als Grundkörper, wobei der Grundkörper zumindest eine Oberfläche 2 aufweist, die mit einem flexiblen Isolationsmaterial auf der Basis einer hochtemperaturbeständigen Kautschukmischung 3 versehen ist.

EP 3 076 044 A1 offenbart einen Reibungskraftübertragungsriemen 1, der eine Reibungskraftübertragungsoberfläche aufweist, die mit Kettengewirk 5 abgedeckt ist. Bei dem Reibungskraftübertragungsriemen 1 kann es sich um einen Keilrippenriemen handeln, der eine Spannungsschicht 4 umfasst. Auf einer Oberfläche der Spannungsschicht ist eine Kompressionsschicht 2, z.B. aus Gummi, gebildet. Ein Spannelement 3 ist entlang einer Längsrichtung des Riemens zwischen der Spannungsschicht 4 und der Kompressionsschicht 2 eingebettet.

Ausgehend von diesem Stand der Technik liegt der Erfindung der Aufgabe zugrunde eine gegenüber dem Stand der Technik unter Beibehalten Ihrer Vorteile verbesserte Lösung bereitzustellen. Eine dahingehende Aufgabe löst ein Körper mit den Merkmalen des Patentanspruches 1 in seiner Gesamtheit.

Erfindungsgemäß ist vorgesehen, dass der Körper aus mindestens zwei Komponenten besteht, von denen die eine Komponente ein Trägerteil mit von dem Trägerteil vorstehenden Funktionselementen und die andere Komponente eine Elastomerschicht ist, die in einer Oberfläche ausmündet, die über die Funktionselemente vorsteht, die zumindest teilweise in der Elastomerschicht eingebettet sind, dadurch gekennzeichnet, dass die Oberfläche der Elastomerschicht auf ihrer den Funktionselementen abgewandten Seite mit zusätzlichen Haftelementen versehen ist. Durch den hierarchischen Aufbau von Elastomerschicht und den Funktionselementen ergibt sich eine erhöhte Anpassungsfähigkeit, insbesondere wenn unter Ausübung von Druck von der Stirnseite der Oberfläche der Elastomerschicht her die nachgiebig ausgebildeten Funktionselemente sich verbiegen können, was zur einer verringerten mechanischen Steifigkeit führt, die jedoch zu einem verbesserten Anschmiegen der Elastomerschichtoberfläche an nahezu beliebig gestaltete Oberflächen von Drittbauteilen führt. Insbesondere wird durch die hier angesprochene Segmentierung eine verbesserte Anpassungsfähigkeit an wellige und nicht glatt ausgebildete Oberflächen erreicht.

In Scher- und Zugrichtung gesehen wird hingegen eine sehr hohe mechanische Stabilität erreicht, in dem sich die Funktionselemente in Belastungsrichtung gesehen vollständig strecken können. Es entsteht dergestalt eine Anisotropie der mechanischen Steifigkeit unter der Druck- und Zugbelastung der Funktionselemente. Im Vergleich mit einer im Stand der Technik bekannten Elastomerschicht wird eine erhöhte mechanische Stabilität der Funktionsschicht durch die im Elastomer eingebetteten Funktionselemente erreicht, so dass insoweit eine Art faserverstärktes Elastomer entsteht, das auch bei mehrfach im Einsatz befindlichem Körper entsprechend dauerhaft funktionssicher ist. Auch hat es sich in praktischen Versuchen gezeigt, dass durch die relative Beweglichkeit zwischen dem Trägerteil und der Elastomerschicht die sogenannten Stick-Slip-Effekte besonders wirksam vermieden sind.

Bei einer bevorzugten Ausführungsform des erfindungsgemäßen Körpers ist vorgesehen, dass die Elastomerschicht mit einer Strukturierung versehen ist, die zumindest die Oberfläche der Elastomerschicht in Segmente unterteilt. Dergestalt entstehen durch die Unterteilung einzelne Drainagekanäle, die etwaig vorhandene überschüssige Flüssigkeit aus dem Kontaktbereich zwischen der Elastomeroberfläche und dem Drittbauteil ableiten können. Dergestalt kommt es trotz des Auftretens größerer Fluid- oder Flüssigkeitsmengen dazu, dass im Funktionsfall hohe Reibwerte zwischen der Elastomeroberfläche und der korrespondierenden Oberfläche des jeweiligen Drittbauteils erhalten sind. Die Ableitung von Flüssigkeiten, die auch mit Partikeln verunreinigt sein können, erfolgt nicht wie teilweise im Stand der Technik aufgezeigt in geschlossenen sondern vielmehr entlang von nach außen hin offenen Kanälen. Flüssigkeiten und Partikel können insoweit in der Funktionsschicht abtransportiert werden.

Vorzugsweise ist dabei ferner vorgesehen, dass die einzelnen Segmente voneinander durchgehend beabstandet zwischen sich die Kanäle begrenzen, die am Rand der Elastomerschicht ins Freie treten, was einer wirksamen Oberflächenentwässerung zugutekommt.

Ein spezieller Vorteil dieser Segmentierung ist auch, dass bei etwaig defekten Elastomeroberflächen durch Abrieb oder dergleichen, es nicht wie sonst bei den bekannten geschlossen Elastomerschichten zur einem raschen Materialversagen der Oberflächen durch Rissverbreiterung kommt, sondern gegebenenfalls nur ein einzelnes Segment beschädigt wird, ohne hierbei die anderen benachbarten Segmente nachteilig zu beeinflussen. Durch die angesprochenen Kanäle, die die Segmente vollständig durchgreifend gegeneinander abgrenzen, kommt es auch zur einer zeitlich raschen Drainage von zuviel vorhandener Flüssigkeit, so dass der Gefahr des ungewollten Aquaplanings wirksam begegnet ist. Insoweit führt die strukturierte Haftoberfläche zur einer zusätzlichen Erhöhung der Adhäsionskraft gegenüber ansonsten geschlossenen Flächen der Funktionskörper.

Bei einer weiteren bevorzugten Ausführungsform des erfindungsgemäßen Körpers ist vorgesehen, dass die Segmente der Elastomerschicht als Inseln ausgebildet vollständig voneinander separiert auf ihren einen freien Stirnseiten die Oberfläche ausbilden und auf ihren anderen gegenüberliegenden Stirnseiten einen vorgebbaren axialen Abstand zum Trägerteil aufweisen, in das fußseitig die Funktionselemente ausmünden, die kopfseitig in die Elastomerschicht eingebettet sind. Durch die angesprochene Inselsegmentierung wird neben einer weiter verbesserten Anpassungsfähigkeit gegenüber Oberflächen von Drittbauteilen auch der Abtransport nicht nur von Flüssigkeiten, sondern auch von Schmutzpartikeln aus dem Bereich der Kontaktfläche erreicht. Sofern dabei vorzugsweise die Elastomerschicht des Körpers aus mehreren Lagen gebildet ist, von denen eine Lage die freien Enden der Funktionselemente aufnimmt und eine andere Lage frei von den Funktionselementen gehalten die Oberfläche ausbildet, kann man in einer relativ weichen Elastomer-Schichtlage die Funktionselemente einbetten und die darüberliegende, freiliegenden Elastomerschichtlage stabiler und abriebfester ausbilden, was einen lang andauernden Einsatzbetrieb des Körpers sicherstellt, ohne dessen Anpassungsfähigkeit zu beeinträchtigen.

Bei einer weiteren bevorzugten Ausführungsform des erfindungsgemäßen Körpers ist vorgesehen, dass der Spaltabstand zwischen den Inseln frei vorgebbar ist und dass insbesondere die einander benachbarten Seitenwände der Inseln zumindest teilweise Schrägflächen aufweisen. Dergestalt können auch größere Schmutzpartikel aus einer Flüssigkeit über die Kontaktoberfläche ins Innere des Körpers zwischen die Funktionselemente abgeleitet werden, so dass dem Körper gegenüber partikulären Fluidverschmutzungen eine Art Filterwirkung zu eigen ist. Vorzugsweise ist hierbei vorgesehen, dass die Abstände zwischen den Inseln von Funktionselementen freigehalten sind und dass die Schichtdicken der Inseln gleich ausgebildet sind.

Bei dem erfindungsgemäßen Körper ist vorgesehen, dass die Oberfläche der Elastomerschicht auf ihrer den Funktionselementen abgewandten Seite weiter funktionalisiert ist, und dabei mit zusätzlichen Haftelementen versehen ist. Dergestalt lässt sich eine verbesserte Anhaftung der Elastomeroberfläche an Oberflächen von Drittbauteilen erreichen, insbesondere ein Zusammenwirken zwischen den Oberflächen in technischer Sicht vorgeben. Hierzu trägt auch mit bei, wenn weiter vorzugsweise vorgesehen ist, dass das Trägerteil auf seiner den Funktionselemente gegenüberliegenden Seite weiter funktionalisiert ist, insbesondere mit einem Klebstoffauftrag, weiterem Verschlussmaterial oder mit informationstragenden und/oder -verarbeitenden Strukturen versehen ist. Dergestalt lässt sich der Körper mit weiteren Drittbauteilen über den Klebstoffauftrag fest verbinden oder mittels des weiteren Verschlussmaterials in wieder lösbarer Weise befestigen. Auch lässt sich der Körper mit Künstlicher Intelligenz ausgestattet als repositionierbares elektrisches Eingabe- Interface im Sinne einer Art Sensormatte, die auch als Tastatur geeignet ist, verwenden.

Im Folgenden wird der erfindungsgemäße Körper anhand von Ausführungsbeispielen nach der Zeichnung näher erläutert. Dabei zeigen in prinzipieller und nicht maßstäblicher Darstellung die
- Figur 1: in der Art einer perspektivischen Draufsicht eine Ausführungsform des Körpers;
- Figuren 2 bis 17: weitere Ausführungsformen des Körpers nach der Figur 1 in teilweiser Stirnansicht.

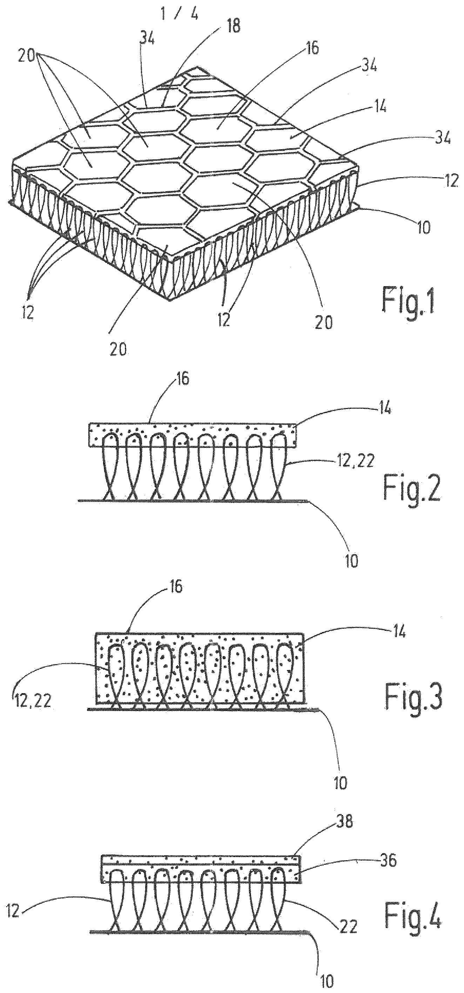

Der Körper nach der Figur 1 besteht aus zwei Komponenten, von denen die eine Komponente ein Trägerteil 10 mit von dem Trägerteil 10 vorstehenden Funktionselementen 12 ist und die andere Komponente ist eine Elastomerschicht 14, die in einer Oberfläche 16 ausmündet, die über die Funktionselemente 12 vorsteht, die zumindest teilweise in der Elastomerschicht 14 eingebettet sind. Bei dem Ausführungsbeispiel nach der Figur 1 ist die Elastomerschicht 14 mit einer Strukturierung 18 versehen, die die Oberfläche 16 respektive die Elastomerschicht 14 in inselartige Segmente 20 unterteilt, die bei der Ausführungsform nach der Figur 1 Sechsecke ausbilden. Der Körper nach der Figur 1 hat eine Rechteckform und bildet eine Art Quader aus. Der gezeigte Quader und mithin der Körper kann in allen Richtungen verlängert werden, sofern dies für die spätere Verwendung sich als sinnvoll erweist. Sofern die inselförmigen Segmente 20 an einer freien Stirnseite der Elastomerschicht 14 ausmünden, werden diese durch den Rand der Oberfläche 16 entsprechend abgeschnitten und bilden insoweit nicht mehr als Ganzes ein Sechseck aus, sondern je nach Randschnitt ein entsprechendes Mehr- oder Vieleck.

Ebenso wie der Körper als Ganzes kann man auch das flächenförmige Trägerteil 10 innerhalb der Bildebene sowohl in der einen als auch in der anderen Richtung beliebig verlängern, und sollte das Trägerteil 10 gewebt sein, sind die geometrischen Abmessungen des dahingehenden Flächengebildes abhängig von den Vorgaben der Webeinrichtung, auf der das Trägerteil 10 gefertigt wird. Insbesondere kann für eine spätere Verwendung das Trägerteil 10 mit den darauf angeordneten Funktionselementen 12 in der Art von rollenartig aufgewickelten Haftverschlussbändern konfektioniert werden. Das Trägerteil 10 mit den vorstehenden Funktionselementen 12 besteht aus Kettfäden und Schussfäden, die in Queranordnung miteinander verwebt ein Grundgewebe für ein Haftverschlussteil bilden. Insoweit sind in das Grundgewebe in Form des Trägerteils 10 fadenförmige Funktionselemente 12 eingebracht, in der Art von Polfäden, die einen weiteren Funktionsbestandteil des Trägerteils 10 darstellen. Das jeweilige fadenförmige Funktionselement 12 bildet dann für das flächenförmige Haftverschlussteil die einzelnen Funktions- oder Verschlusselemente aus, was im Folgenden noch näher erläutert werden wird. Des Weiteren spricht man häufig fachsprachlich anstelle der eingesetzten Fäden für die Funktionselemente 12 auch von Garnen oder Garnsystemen. Das Trägerteil 10 braucht nicht aus einem Gewebe gebildet zu sein, sondern kann auch aus einer Maschenware bestehen, beispielsweise in Form einer Strick- oder Wirkware. Der Maschenware liegt kein geradliniger Fadeneintrag zugrunde, sondern eine maschenbildende Verschlingung der Fäden untereinander. Durch entsprechende Systeme kann auch hier eine Dritte Dimension mittels Polfäden erzeugt werden, die nach der Erfindung die Funktionselemente 12 ausbilden können. Des Weiteren kann die Funktionsschicht aus einem Vlies / Nonwoven gefertigt sein. Die für die Funktionsschicht benötigten Faserelemente können entweder direkt aus dem Vliesstoff entstehen (beispielsweise in Form eines Nadelvliesstoffes mit Schlingen, gefertigt auf einer DI-LOUR (FA. DILO) - Maschine) oder die Elemente der Funktionsschicht werden nachträglich eingebracht mittels sogenanntem Tufting oder im Rahmen eines Nähwirkprozesses.

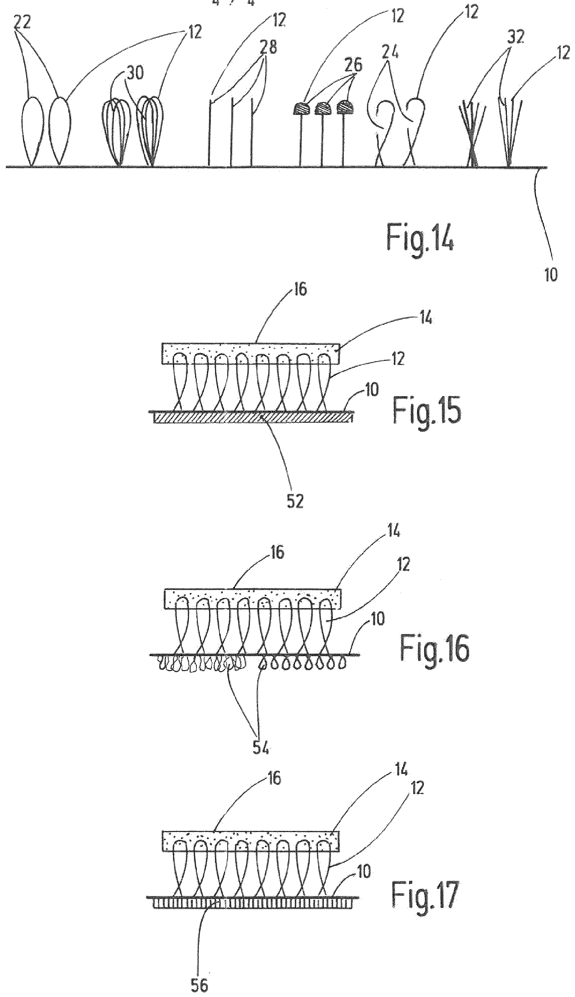

Der jeweilige Schussfaden des Trägerteils 10 ist in der Art einer Sinus- oder Cosinuswelle bogenförmig ausgebildet und an den Kreuzungsstellen zwischen Kettfäden und Schussfäden verlaufen die Kettfäden parallel zur Produktionsrichtung einer Webmaschine sowie parallel zueinander in geradliniger Anordnung. Bei einer möglichen Ausführungsform sind nur die Schussfäden bogenförmig im Grundgewebe verlaufend angeordnet, wobei der jeweilige Schussfaden in alternierender Reihenfolge einen Kettfaden übergreift und den in Reihe unmittelbar nachfolgenden untergreift. An der Stelle des jeweiligen Untergriffs des Kettgewebes bildet der Funktions- oder Polfaden eine darüberliegende Schlaufe 22 aus, wie sie beispielhaft in der Figur 14 ganz links auf dem Trägerteil 10 aufstehend dargestellt ist. Die Schlaufeneinbindung in das Grundgewebe in Form des Trägerteils 10 lässt sich in der Art einer V-Bindung verwirklichen; es sind hier aber auch andere Bindungsarten denkbar, beispielsweise das Einbinden des jeweiligen Funktionsfadens in W-förmiger Art oder dergleichen. Wie in der Figur 1 gezeigt werden solche Schlaufen 22 zur Herstellung des Körpers als Ganzes eingesetzt; es besteht aber auch die Möglichkeit die Schlaufen 22 entlang einer Trennlinie 24 aufzuschneiden, so dass eine Art bogenförmig verlaufender Haken entsteht, gemäß der Darstellung nach der Figur 14 (zweitletzte Lösung von rechts aus gesehen).

Verläuft die Trennlinie auf der Oberseite einer Schlaufe 22 und schmilzt man die freien Enden der geöffneten Schlaufe an, entsteht jeweils ein pilzförmiges Verschlusselement 26. Verzichtet man auf das Anschmelzen, erhält man beispielsweise nach Durchführen eines Reck- oder Kämmvorgangs dünnstielige Elemente 28 gemäß der Darstellung nach der Figur 14. Ferner besteht die Möglichkeit durch Einsatz von Mehrfadensystemen mehrere Schlaufen in Form eines Schlaufenbündels 30 zu erhalten und schneidet man diese Schlaufenbündel 30 in Querrichtung kopfseitig ab, parallel zum Verlauf des Trägerteils 10, ergibt dies einen Wirrfaserverlauf für die Elemente 32 wie in Blickrichtung auf die Figur 14 gesehen ganz rechts dargestellt. Das Trägerteil 10 kann aber auch aus einem geschlossenen Kunststoffband (nicht dargestellt) gebildet sein und die darauf angeordneten, vorzugsweise pilzförmigen Funktionselemente 12 sind dann einstückiger Bestandteil des Trägerteils 10 und eine dahingehende Komponente für den Körper lässt sich im Rahmen eines Gieß- oder Chill-Roll-Verfahrens erhalten. Solche Lösungen einschließlich des Herstellverfahrens sind beispielhaft in der DE 100 39 937 A1 aufgezeigt. Des Weiteren besteht die Möglichkeit solche Komponenten im Rahmen eines 3D-Druckverfahrens zu erhalten, wie es beispielhaft in der DE 101 06 705 C1 dargestellt ist oder im Rahmen eines Beflockungsverfahrens, beispielsweise wie in der DE 10 2005 043 452 A1 aufgezeigt.

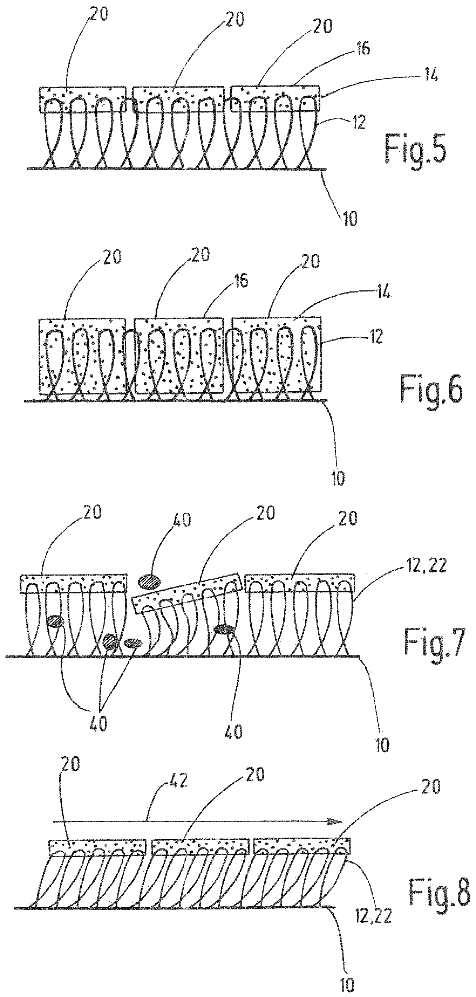

Bevorzugt besteht jedoch die eine Komponente des Körpers aus einem dreidimensionalen Textil, wie vorstehend vorgestellt und einer dessen Polelemente ganz oder teilweise einbettenden Elastomerschicht 14, die eine geschlossene Oberfläche 16 ausbildet (Figuren 2, 3) oder die segmentiert ist, wie beispielsweise in der Figur 1 dargestellt. Bei der Ausführungsform nach der Figur 1 wird die Elastomerschicht 14 als dünne Schicht auf dem kopfseitigen Verschlussmaterial 22 in Form der Funktionselemente 12 aufgebracht. Für die Elastomerschicht 14 kommen neben handelsüblichen Elastomeren auch thermoplastische Elastomere oder Blends aus diesen Materialien zum Einsatz auch unter Einbezug von reinen Thermoplasten. Insgesamt kommen für die Elastomerschicht 14 Materialien zum Einsatz wie Polysiloxane, Polyurethane, Naturkautschuke, SBR, EPDM einschließlich Polyvinylsiloxane und PDMS. Zur Herstellung des Körpers nach der Figur 1 lassen sich die auf dem Trägerteil 10 angeordneten gleich hohen Funktionselemente 12 in ein Bad eintauchen, das mit dem jeweiligen Elastomermaterial in flüssiger Form befüllt ist. Nach einer gewissen Aushärtzeit nach Entnahme aus dem Tauchbad verbleibt dann eine feste Elastomerschicht 14 und bildet als weitere Komponente den Körper aus, wobei die Schlaufenenden der Schlaufen 22 kopfseitig vollständig von der Unterseite der Elastomerschicht 14 in Blickrichtung auf die Figur 1 gesehen aufgenommen sind. Je nach Eintauchtiefe in das Tauchbad lassen sich unterschiedlich dicke Elastomerschichten 14 für den Körper ausbilden, wie dies beispielhaft in den Figuren 2, 3; 5, 6 gezeigt ist, einmal in Form einer durchgehenden Oberfläche 16 bzw. in segmentierter Form. Bei voller Dickenausprägung der Elastomerschicht 14 reicht diese von der stirnseitig freigelassenen Oberfläche 16 bis zum fußseitigen Übergang der Funktionselemente 12 respektive der Schlaufen 22 in die Oberseite des zugeordneten Trägerteils 10, wobei gemäß der Darstellung nach den Figuren 3 und 6 ein geringer axialer Abstand verbleibt. Neben dem beschriebenen Tauchbadverfahren lässt sich die Elastomerschicht 14 auch mittels eines Rakelverfahrens oder eines Sprühauftragverfahrens auf der einen Komponente des Körpers bestehend aus Trägerteil 10 und den Funktionselementen 12 anbringen. Ansonsten besteht auch die Möglichkeit für die Herstellung Laminier- und Kaschierprozesse zur Anwendung zu bringen.

Wie ferner die Figur 1 zeigt, sind die Segmente 20 der Elastomerschicht 14 als sechseckförmige oder wabenartige Inseln ausgebildet, wobei die Segmente 20 vollständig über zickzackförmig verlaufende Kanäle 34 voneinander separiert auf ihrer einen oberen, freien Stirnseite die Oberfläche 16 ausbilden. Auf ihrer anderen unteren freien Stirnseite weist die Elastomerschicht 14 einen vorgebbaren axialen Abstand zum Trägerteil 10 auf, in das fußseitig die Funktionselemente 12 ausmünden, die kopfseitig vollständig in die Elastomerschicht 14 eingebettet sind. Die Oberflächengestaltung für den Körper nach der Figur 1 ist nur beispielhaft und es besteht eine Vielzahl von Gestaltungsmöglichkeiten für die Oberfläche 16, die insoweit auch ein Ornament ausbilden kann. So können Kanäle 34 auch geradlinig oder in Form eines Schachbrettmusters in der Oberfläche 16 verlaufend angeordnet sein oder sie sind in Wellenform in die Oberfläche 16 eingebracht. Des Weiteren besteht die Möglichkeit die Kanäle derart schmal auszubilden, dass die inselartigen Segmente 20 unmittelbar mit ihren Seitenrändern aneinanderstoßen.

Wie des Weiteren die Figur 4 zeigt, kann die Elastomerschicht 14 aus mehreren Lagen, beispielsweise zwei Lagen bestehen, von denen eine Lage 36 die freien Enden der Funktionselemente 12 aufnimmt und die darüberliegende andere Lage 38 frei von den Funktionselemente 12 gehalten, die Oberfläche 16 ausbildet, die gemäß der Darstellung nach der Figur 4 geschlossen ausgebildet sein oder sein kann oder aber gemäß den Ausführungsbeispielen nach den Figuren 5 und 6 segmentiert sein. Auch ein dahingehender Lagenaufbau für eine Elastomerschicht 14 lässt sich über ein Rakel- oder sonstiges Auftragsverfahren erhalten. Ebenso sind Laminierungs- und (Folien-) Kaschierungsprozesse einsetzbar.

Wie die Seitendarstellung nach der Figur 7 zeigt, können die schlaufenartigen Funktionselemente 12 einbiegen oder einknicken, so dass es zu einer Vergrößerung des Abstands eines Kanals 34 zwischen benachbarten Segmenten 20 kommen kann, was die Möglichkeit eröffnet, dass Partikel 40 den spaltartigen Kanal 34 überwinden und von der Oberfläche 16 auf die Unterseite der Elastomerschicht 14 gelangen und dort in den Schlaufen 22 der Funktionselemente 12 festgehalten werden. Dergestalt ließen sich Partikel 40 aus einem Flüssigkeitsstrom zurückhalten, so dass dem Körper dann eine filternde Bedeutung zukommt. Fällt der Fluiddruck auf der Oberseite der Oberfläche 16 ab, sind die Funktionselemente 12 in der Lage das eingeknickte Segment 20 zurückzustellen, so dass alle Segmente mit ihrer Oberseite in einer gemeinsamen planen Oberfläche 16 ausmünden.

Bei der Darstellung nach der Figur 8 wiederum wird deutlich, dass bei einer Schrägkrafteinleitung in Pfeilrichtung 42 parallel zur Ausrichtung des Trägerteils 10 die einzelnen Funktionselemente 12 gereckt oder gestreckt werden, und aufgrund der festen Verankerungspunkte auf der Fußseite in Richtung des Trägerteils 10 und auf der Kopfseite in Richtung der Elastomerschicht 14 lässt der dahingehende Körper die Aufnahme hoher Querkräfte in Form von Scherkräften zu.

Durch die hierarchische Struktur des Körpers gebildet aus einem Textil mit stehendem Pol, der ganz oder teilweise in dem Elastomer eingebettet ist, welches durchgehend oder in Segmente 20 unterteilt wird, ist eine komplett neue, sehr komplexe Struktur erreicht, die eine deutlich höhere Anpassungsfähigkeit an Oberflächen besitzt, sofern der Körper mit seiner Oberfläche 16 in Anlage mit solchen Oberflächen von Drittbauteilen (nicht dargestellt) kommt. Nicht nur kann sich die Elastomerschicht 14 wie beschrieben zur Kontaktbildung verformen, sondern das darunterliegende Textil 10 mit seinem Polementen 12 kann sich auch deformieren um sich an Substratunebenheiten anzupassen, wie in Figur 7 angedeutet. Bei Benetzen der Kontaktfläche respektive Oberfläche 16 mit Flüssigkeiten kann diese sowohl durch die zwischen den Segmenten 20 existierenden Kanäle 34 abfließen, als auch an den Segmenten 20 vorbei in die Polstruktur des Textils und dort unterhalb der Elastomerschicht 14 zur Seite in die Umgebung abgeleitet werden. Dabei ist eine deutlich höhere Ableitungsleistung im Vergleich zu einer strukturierten, aber einstückigen Elastomeroberfläche gegeben. Das dreidimensionale Textil hinter der segmentierten Elastomeroberfläche wirkt als Puffer und kann in kurzer Zeit eine große Menge Flüssigkeit aufnehmen und effektiv aus der Kontaktzone des Körpers und eines benachbarten Substrats entfernen. Zusätzlich ist wie dargestellt eine erhöhte Resistenz gegenüber Verschmutzung mit Partikeln 40 erreicht. Da bei der Deformation durch Partikelverschmutzung in der Kontaktfläche nur einzelne Segmente 20 durch Deformieren der Funktionselemente 12 rückstellbar aus ihrer Lage gebracht werden (Fig. 7) und die restliche Elastomeroberfläche in Kontakt mit dem Substrat oder Drittbauteil verbleibt, wird bedeutend weniger Kraft ausgeübt als bei einer durchgehenden Elastomeroberfläche nach dem Stand der Technik ohne hierarchischen Aufbau. Bei Querbewegung können kleine Partikel 40 auch zwischen den Segmenten 20 zu den Pol- oder Funktionselementen 12 abgeleitet werden und so gleichermaßen aus der Kontaktfläche 16 entfernt werden. Das faserverstärkte Elastomerkomposit gemäß der Darstellung nach der Figur 1 ist durch die Einbettung der Funktions- oder Polelemente 12 in der Elastomerschicht 14 zudem stabiler und abriebfester als eine reine geschlossene Elastomerschicht. Im Vergleich zu einer solchen Elastomerschicht beispielsweise in der Art eines sogenannten Schaumrückens wird eine anisotrope Steifigkeit erreicht, die in Kompression zu einer hohen Anpassungsfähigkeit durch Biegen und Knicken der Funktionselemente 12 führt, während in Scher- und Zugrichtung eine erhöhte Steifigkeit vorliegt.

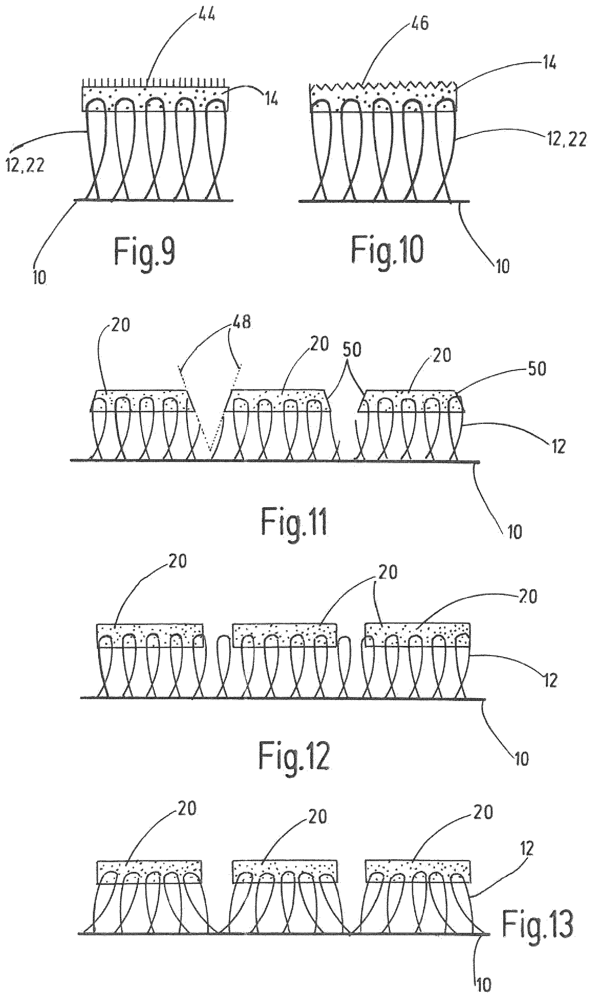

Die Figur 9 zeigt ausschnittsweise, dass die Oberfläche 16 der Elastomerschicht 14 auf ihrer den Funktionselementen 12 abgewandten Seite weiter funktionalisiert ist, und dabei mit zusätzlichen Haftelementen 44 versehen ist. Hierbei kann es sich beispielsweise um Haftelemente 44 mit verbreiterten Enden (nicht dargestellt) handeln, deren Anhaftung gegenüber Drittbauteilen überwiegend mittels Van-der-Waals-Kräften realisiert wird. Dahingehende Haftelemente 44 sind mit einem durchgehenden Trägerband einstückig verbunden, das sich beispielsweise in klebender Weise auf der Oberfläche 16 anbringen lässt. Ein Verfahren zum Herstellen solcher Haftelemente 44 auf einem Trägermaterial ist in DE 10 2004 012 067 A1 offenbart.

Bei der Ausführungsform nach der Figur 10 hingegen ist in die Oberfläche 16 eine weitere Strukturierung 46 eingebracht, um beispielsweise die Rauigkeit der Oberfläche 16 zu erhöhen.

Bei der Ausführungsform nach der Figur 11 liegt zunächst eine geschlossene Elastomerschicht 14 mit durchgehender Oberfläche 16 vor, gemäß Ausführungsbeispiel nach der Figur 2 und von der freien Stirnseite des Körpers her wird dann ein keilförmiger Schnitt eingebracht, von dem in Figur 11 nur andeutungsweise die Schnittlinien 48 eingezeichnet sind. Der Schnitt entlang der Schnittlinien 48 ist derart geführt, dass ggf. darunterliegende Funktionselemente 12 in Form der Schlaufen 22 mit angeschnitten werden. Insgesamt entstehen hierdurch Segmente mit schräg verlaufenden Neigungsflächen 50, die den vermehrten Eintritt von Flüssigkeit oder Verschmutzungspartikeln in die Ebenen zwischen Trägerteil 10 und Unterseite der Segmente 20 ermöglichen. Vergleichbar dem Schnittverlauf mit den Schnittlinien 48 verlaufen die Neigungsflächen 50 zweier benachbarter Segmente 20 in Richtung des Trägerteils 10 konisch aufeinander zu.

Bei der Ausführungsform nach der Figur 12 kann der Abstand eines Kanals 34 durch einen geradlinig verlaufenden Schnitt erfolgen, der derart durchgeführt wird, dass Funktionselemente 12 zwischen zwei benachbarten Segmenten 20 unberührt bleiben. Bei der Ausführungsform nach der Figur 13 hingegen sind in Fünfergruppen zusammengefasst und aufeinander zugeneigt Funktionselemente 12 in einem Segment 20 kopfseitig festgelegt. Zum Schneiden der Oberfläche 16 respektive der Elastomerschicht können Schneidklingen, Laser, Stanzvorrichtungen etc. zum Einsatz kommen, oder auch thermisches Trennen und Wasserstrahlschneiden ist möglich.

Bei den Ausführungsformen nach den Figuren 15 bis 17 ist bei einer Lösung wie in der Figur 2 aufgezeigt, das verwendete Trägerteil 10 auf seiner den Funktionselementen 12 gegenüberliegenden Seite weiter funktionalisiert, insbesondere mit einem Klebstoffauftrag 52 (Figur 15), einem weiteren Verschlussmaterial 54 (Figur 16) oder mit informationstragenden und/oder -verarbeitenden Strukturen 56 (Figur 17) versehen.

Mit dem erfindungsgemäßen Körper mit seiner Vielzahl von Ausgestaltungsmöglichkeiten, die hier nicht abschließend aufgezählt sind, ist eine durch hierarchischen Aufbau erhöhte "Reib- und Adhäsionsperformance" erreicht, bei gleichzeitig erhöhter Robustheit gegenüber Verschmutzung der Kontaktfläche Körper-Substrat (Drittbauteil) durch Flüssigkeiten oder Feststoffe.

## Patentansprüche

1. Körper bestehend aus mindestens zwei Komponenten, von denen die eine Komponente ein Trägerteil (10) mit von dem Trägerteil (10) vorstehenden Funktionselementen (12) und die andere Komponente eine Elastomerschicht (14) ist, die in einer Oberfläche (16) ausmündet, die über die Funktionselemente (12) vorsteht, die zumindest teilweise in der Elastomerschicht (14) eingebettet sind,
**dadurch gekennzeichnet,**
**dass** die Oberfläche (10) der Elastomerschicht (14) auf ihrer den Funktionselementen (12) abgewandten Seite mit zusätzlichen Haftelementen (44) versehen ist.

2. Körper nach Anspruch 1, **dadurch gekennzeichnet, dass** die Elastomerschicht (14) mit einer Strukturierung (18) versehen ist, die zumindest die Oberfläche (16) in Segmente (20) unterteilt.

3. Körper nach Anspruch 2, **dadurch gekennzeichnet, dass** die einzelnen Segmente (20) voneinander beabstandet zwischen sich Kanäle (34) begrenzen, die am Rand der Elastomerschicht (14) ins Freie treten.

4. Körper nach einem der Ansprüche 2 oder 3, **dadurch gekennzeichnet, dass** die Segmente (20) der Elastomerschicht (14) als Inseln ausgebildet vollständig voneinander separiert auf ihrer einen freien Stirnseite die Oberfläche (16) ausbilden und auf ihrer anderen gegenüberliegenden Stirnseite einen vorgebbaren axialen Abstand zum Trägerteil (10) aufweisen, in das fußseitig die Funktionselemente (12) ausmünden, die kopfseitig in die Elastomerschicht (14) eingebettet sind.

5. Körper nach einem der vorstehenden Ansprüche, **dadurch gekennzeichnet, dass** die Elastomerschicht (14) aus einer oder mehreren Lagen (36, 38) gebildet ist, von denen eine Lage (30) die freien Enden der Funktionselemente (12) aufnimmt und eine andere Lage (38) frei von den Funktionselementen (12) gehalten die Oberfläche (16) ausbildet.

6. Körper nach einem der Ansprüche 4 oder 5, **dadurch gekennzeichnet, dass** der Spaltabstand zwischen den Inseln (20) frei vorgebbar ist und dass insbesondere die einander benachbarten Seitenwände der Inseln (20) zumindest teilweise Schrägflächen (50) aufweisen.

7. Körper nach einem der Ansprüche 4 bis 6, **dadurch gekennzeichnet, dass** die Abstände zwischen den Inseln (20) von Funktionselementen (12) freigehalten sind.

8. Körper nach einem der Ansprüche 4 bis 7, **dadurch gekennzeichnet, dass** die Schichtdicken der Inseln (20) gleich ausgebildet sind.

9. Körper nach einem der vorstehenden Ansprüche, **dadurch gekennzeichnet, dass** die zusätzlichen Haftelemente (44) verbreiterte Enden aufweisen.

10. Körper nach einem der vorstehenden Ansprüche, **dadurch gekennzeichnet, dass** das Trägerteil (10) auf seiner den Funktionselementen (12) gegenüberliegenden Seite weiter funktionalisiert ist, insbesondere mit einem Klebstoffauftrag (52), weiterem Verschlussmaterial (54) oder mit informationstragenden und/oder -verarbeitenden Strukturen (56) versehen ist.

## Claims

1. Body consisting of at least two components, one component of which is a carrier part (10) with functional elements (12) projecting from the carrier part (10), and the other component is an elastomer layer (14) opening into a surface (16) that projects beyond the functional elements (12), which are at least partially embedded in the elastomer layer (14),
**characterized in**
**that** the surface (16) of the elastomer layer (14) is provided with additional adhesive elements (44) on its side facing away from the functional elements (12).

2. Body according to claim 1, **characterized in that** the elastomer layer (14) is provided with a structure (18) which divides at least the surface (16) into segments (20).

3. Body according to claim 2, **characterized in that** the individual segments (20) are spaced apart from one another and delimit channels (34) between them, which open to the outside at the edge of the elastomer layer (14).

4. Body according to one of claims 2 or 3, **characterized in that** the segments (20) of the elastomer layer (14), being designed as islands completely separated from one another, form the surface (16) on their one free end face and have a predeterminable axial distance from the carrier part (10) on their other opposite end face, into which the functional elements (12) open on the foot side, which are embedded in the elastomer layer (14) on the head side.

5. Body according to one of the preceding claims, **characterized in that** the elastomer layer (14) is formed from one or more layers (36, 38), one layer (30) of which accommodates the free ends of the functional elements (12) and another layer (38) forms the surface (16) being kept free from the functional elements (12).

6. Body according to one of claims 4 or 5, **characterized in that** the gap distance between the islands (20) can be freely specified and that, in particular, the adjacent side walls of the islands (20) have at least partially inclined surfaces (50).

7. Body according to one of claims 4 to 6, **characterized in that** the distances between the islands (20) are kept free from functional elements (12).

8. Body according to one of claims 4 to 7, **characterized in that** the layer thicknesses of the islands (20) are of identical design.

9. Body according to one of the preceding claims, **characterized in that** the additional adhesive elements (44) have widened ends.

10. Body according to one of the preceding claims, **characterized in that** the carrier part (10) is further functionalized on its side opposite the functional elements (12), in particular with an adhesive coating (52), further closure material (54) or with information-carrying and/or information-processing structures (56).

## Revendications

1. Corps constitué d'au moins deux composants, l'un desdits composants étant une partie de support (10) munie d'éléments fonctionnels (12) en saillie au-delà de ladite partie de support (10), et l'autre composant étant une couche d'élastomère (14) qui débouche dans une surface (16) dépassant au-delà desdits éléments fonctionnels (12) noyés, au moins en partie, dans ladite couche d'élastomère (14),
**caractérisé par le fait**
**que** la surface (10) de la couche d'élastomère (14) est pourvue d'éléments adhérents (44) supplémentaires sur sa face pointant à l'opposé des éléments fonctionnels (12).

2. Corps selon la revendication 1, **caractérisé par le fait que** la couche d'élastomère (14) est dotée d'une structuration (18) scindant au moins la surface (16) en des segments (20).

3. Corps selon la revendication 2, **caractérisé par le fait que** les segments (20) individuels, distants les uns des autres, délimitent entre eux des canaux (34) qui gagnent l'air libre au niveau du bord de la couche d'élastomère (14).

4. Corps selon l'une des revendications 2 ou 3, **caractérisé par le fait que** les segments (20) de la couche d'élastomère (14), conçus en tant qu'îlots totalement distincts les uns des autres, matérialisent la surface (16) sur l'une de leurs faces extrêmes libres et présentent, sur leur autre face extrême opposée, un espacement axial pouvant être prédéfini vis-à-vis de la partie de support (10) dans laquelle débouchent, côté embase, les éléments fonctionnels (12) noyés frontalement dans ladite couche d'élastomère (14).

5. Corps selon l'une des revendications précédentes, **caractérisé par le fait que** la couche d'élastomère (14) est composée d'une ou plusieurs strate(s) (36, 38), l'une (36) desdites strates recevant les extrémités libres des éléments fonctionnels (12) et une autre strate (38), maintenue exempte desdits éléments fonctionnels (12), matérialisant la surface (16).

6. Corps selon l'une des revendications 4 ou 5, **caractérisé par le fait que** la distance séparant les îlots (20) peut être librement préétablie ; et **par le fait que** notamment les parois latérales desdits îlots (20), voisines les unes des autres, sont au moins partiellement nanties de surfaces inclinées (50).

7. Corps selon l'une des revendications 4 à 6, **caractérisé par le fait que** les distances séparant les îlots (20) d'éléments fonctionnels (12) sont maintenues libres.

8. Corps selon l'une des revendications 4 à 7, **caractérisé par le fait que** les épaisseurs de couche des îlots (20) sont de conception identique.

9. Corps selon l'une des revendications précédentes, **caractérisé par le fait que** les éléments adhérents (44) supplémentaires présentent des extrémités élargies.

10. Corps selon l'une des revendications précédentes, **caractérisé par le fait que** la partie de support (10) est additionnellement fonctionnalisée sur sa face opposée aux éléments fonctionnels (12) en étant dotée, en particulier, d'un dépôt d'adhésif (52), d'un matériau d'occultation (54) supplémentaire, voire de structures (56) portant et/ou traitant des informations.
